# EUROPEAN PATENT APPLICATION

(11) **EP 3 572 246 A1**
(43) Date of publication of application: **27.11.2019**
(21) Application number: 19175440.7
(22) Date of filing: 20.05.2019
(51) Int. Cl.: B60C 11/24

(54) **PNEUMATIC TIRE, TIRE WEAR MEASURING METHOD, TIRE WEAR MEASURING SYSTEM AND SENSOR MODULE**

(30) Priority: 25.05.2018 JP 2018100207
(71) Applicant: Sumitomo Rubber Industries, Ltd., Kobe-shi, Hyogo-ken 651-0072 (JP); Alps Alpine Co., Ltd., Tokyo 145-8501 (JP)
(72) Inventor: SETOKAWA, Hiroto, Kobe-shi,, Hyogo 651-0072 (JP); OCHI, Jun, Kobe-shi,, Hyogo 651-0072 (JP); NAKAMURA, Tokuo, Tokyo, 145-8501 (JP); NOGUCHI, Takafumi, Tokyo, 145-8501 (JP)
(74) Representative: Manitz Finsterwald Patent- und Rechtsanwaltspartnerschaft mbB

(57) **Abstract**

A pneumatic tire comprising a magnetic body provided in a tread portion, a magnetic sensor for detecting a magnetic flux density of a magnetic field formed by the magnetic body disposed at a radially inward position corresponding to the magnetic body, wherein a magnetic body is formed by dispersing powdery particles of a hard magnetic material in a polymeric material and is magnetized in one direction and is provided in the tread portion so that the magnetization direction and the tire radial direction coincide with each other; a method of tire wear measuring for measuring a wear state in the pneumatic tire; a tire wear measuring system for measuring a wear state in the pneumatic tire; and a sensor module installable inside the pneumatic tire.

## Description

### [TECHNICAL FIELD]

The present invention relates to a pneumatic tire for a vehicle such as an automobile, a tire wear measuring method, a tire wear measuring system, and a sensor module.

### [BACKGROUND ART]

In a pneumatic tire (hereinafter simply referred to as "tire") mounted on a vehicle, the tread portion in contact with the ground wears as the vehicle runs, and the tread groove gradually becomes shallower. When the depth of the tread groove becomes shallow beyond the wear limit, slippage occurs during running, and the risk of accident occurrence increases. For this reason, it has been conventionally managed to control so that the wear amount of the tread portion does not exceed the wear limit, and when the wear limit is reached, it is determined that the tire is replaced at an earlier time to ensure safety during running.

As a method of checking the wear state of the tread portion specifically, in general, a mark such as a slip sign is provided in the tread portion, and when this mark appears, it is judged that the wear amount has reached the wear limit. However, general users cannot be expected too much about the reliable check of this mark. Thus, instead of visual confirmation by such a user, have been proposed technologies by which the user can grasp the tire wear state technically and accurately recognize that the tires came in time for replacement.

For example, a tire wear limit detecting device has been developed, in which a detected object made of a magnetic material is buried at a place where wear becomes at the wear limit, and a magnetic sensor or the like is used as a detecting means to detect the detected object exposed by wear and detects the tire of the wear limit(for example, Patent Document 1). And a tire wear measurement method has been developed, in which the wear of tire is detected by detecting the magnetic field changing in accordance with the shape change of a magnetic body buried in a groove portion of a tread or in a tire according to the wear of tread portion (for example, Patent Document 2).

### [PRIOR ART DOCUMENT]

### [PATENT DOCUMENT]

Patent Document 1: JP-U-62-83704
Patent Document 2: JP-A-4054196

### [SUMMARY OF THE INVENTION]

### [DISCLOSURE OF THE INVENTION]

However, in both the tire wear limit detection device of Patent Document 1 and the tire wear measurement method of Patent Document 2, the detection means such as a magnetic sensor is provided in the vehicle body side, for example, in a wheelhouse. Therefore, the magnetic body can be detected only when the magnetic body provided on the rotating tire side approaches the detection means, and only intermittent measurement is possible. Further, since the positional relationship between the detection means and the magnetic body is easy to change due to the inclination of the vehicle body, the road surface condition during running, the tire air pressure, etc., it is impossible to constantly and accurately measure the strength of the magnetic field. Therefore, in response to a strong demand for safety of vehicles in recent years, a technology capable of more accurately grasping the tire wear state is required.

Therefore, an object of the present invention is to provide a technology for measuring wear of a pneumatic tire capable of grasping the wear state of a tire accurately at all time by constantly and accurately measuring the strength of a magnetic field changed by wear.

### [SUMMARY OF THE INVENTION]

The present inventors have conducted extensive studies in order to solve the above problems. As a result, it was found that the above problems can be solved by inventions mentioned below, and thus the present invention has been completed.

The first aspect of the present invention is;
a pneumatic tire comprising:
a magnetic body provided in a tread portion;
a magnetic sensor for detecting a magnetic flux density of a magnetic field formed by the magnetic body disposed at a radially inward position corresponding to the magnetic body;
wherein the magnetic body is formed by dispersing powdery particles of a hard magnetic material in a polymeric material and is magnetized in one direction and is provided in the tread portion so that the magnetization direction and the tire radial direction coincide with each other.

The second aspect of the present invention is;
the pneumatic tire in accordance with the first aspect wherein a position where the magnetic sensor is disposed is a lumen surface.

The third aspect of the present invention is;
the pneumatic tire in accordance with the first or second aspect, wherein the magnetic body is provided so as to be the difference between a magnetic flux density detected by the magnetic sensor in a brand-new state before wear of the tread portion and a magnetic flux density detected by the magnetic sensor in a state where the tread portion wears to the wear limit is 1 mT or more.

The fourth aspect of the present invention is;
the pneumatic tire in accordance with any one of the first to third aspect, wherein the hard magnetic material is one or more magnetic powders selected from the group consisting of magnetic powders for producing alnico magnets, ferrite magnets, samarium magnets, and neodymium magnets.

The fifth aspect of the present invention is;
a tire wear measuring method for measuring a wear state in a pneumatic tire in accordance with any one of the first to fourth aspect, comprising:
measuring a magnetic flux density of a magnetic field changed by wear of the magnetic body with the magnetic sensor and measuring a wear state of the pneumatic tire based on the change in the measured magnetic flux density.

The sixth aspect of the present invention is;
a tire wear measuring system for measuring a wear state in a pneumatic tire in accordance with any one of the first to fourth aspect,
which is configured to measure a wear state of the object pneumatic tire by;
detecting a magnetic flux density, changing according to wear state of the magnetic body, of a same type of tire as the object pneumatic tire in advance, and
comparing a magnetic flux density detected in the object pneumatic tire by the magnetic sensor.

The seventh aspect of the present invention is;
a sensor module installable inside a pneumatic tire,
which has a magnetic sensor for detecting a magnetic flux density of a magnetic field in a tire radial direction of the tread portion, and
is configured to measure wear of the tread portion based on a magnetic flux density detected by the magnetic sensor.

The eighth aspect of the present invention is;
the sensor module in accordance with the seventh aspect,
wherein the magnetic sensor can be disposed on the lumen surface of the pneumatic tire.

The ninth aspect of the present invention is;
the sensor module in accordance with the seventh or eighth aspect, wherein the magnetic sensor can measure a magnetic flux density difference of 1 mT or more.

### [EFFECT OF THE INVENTION]

In accordance with the present invention, a wear measurement technology for a pneumatic tire capable of constantly and accurately grasping the wear state of a tire by constantly and accurately measuring the strength of a magnetic field changed by wear, at all time, can be provided.

### [BRIEF DESCRIPTION OF THE DRAWINGS]

[Fig. 1] A cross sectional view showing a part of a cross section of a pneumatic tire in accordance with an embodiment of the present invention.
[Fig. 2] A schematic cross-sectional view illustrating a positional relationship between a magnetic body and a magnetic sensor in a pneumatic tire in accordance with an embodiment of the present invention.
[Fig. 3] A diagram showing the relationship between the amount of change in magnetic flux density and the amount of wear in accordance with an embodiment of the present invention.
[Fig. 4] A diagram showing an error between a quadratic regression curve and an actual wear amount in accordance with an embodiment of the present invention.

### [EMBODYMENT FOR CARRYING OUT THE INVENTION]

Hereinafter, the present invention will be described with reference to the accompanying drawings.

### [1] Pneumatic Tire in Accordance with the Present Embodiment

### 1. Outline of the Pneumatic Tire in Accordance with the Present Embodiment

First, the outline of the pneumatic tire in accordance with the present embodiment will be described. In the pneumatic tire in accordance with the present embodiment:
a magnetic body is provided in the tread portion;
a magnetic sensor for detecting the magnetic flux density of the magnetic field formed by the magnetic body is disposed at a radially inward position corresponding to the magnetic body; and
the magnetic body is formed by dispersing powdery particles of a hard magnetic material in a polymeric material, magnetized in one direction and provided in the tread portion so that the magnetizing direction and the tire radial direction coincide with each other.

The magnetic body provided in the tread portion is formed by dispersing the powder material of the hard magnetic material in the polymer material and wears in accordance with the wear of the tread portion accompanying the running of the vehicle to change the magnetic flux density continuously. At this time, since the magnetic sensor for detecting the magnetic flux density is disposed in the radially inward position corresponding to the magnetic body inside the tire, that is, in the tire itself, the continuous change of the magnetic flux density of the magnetic body is measured by the magnetic sensor, so that it is possible to grasp the wear state of the tire mounted on the vehicle over time. Further, even when the tire is influenced by the inclination of the vehicle body, the road surface condition during running, and the tire air pressure, etc., the positional relationship between the magnetic sensor and the magnetic body can be maintained constant, so that it is possible to constantly and accurately measure the change in magnetic flux density and to grasp the tire wear state with high accuracy.

In addition, as described above, since the magnetic body formed by dispersing the powder material of the hard magnetic material in the polymer material is magnetized in one direction and provided in the tread portion so that the magnetization direction coincides with the tire radial direction, it is possible to grasp the wear state of the tire with high accuracy by the magnetic sensor arranged in the position inward in the radial direction corresponding to the magnetic body.

### 2. Features of the Pneumatic Tire in Accordance with the Present Embodiment

As described above, in the pneumatic tire in accordance with the present embodiment, the magnetic body formed by dispersing the powder material of the hard magnetic material in the polymer material and the magnetic sensor are arranged to face the inside and the outside, respectively, in the radial direction of the same tire, and the magnetic body is magnetized in one direction and is provided in the tread portion so that the direction of magnetization and the tire radial direction coincide with each other. Therefore, in the following, the positional relation between the magnetic body and the magnetic sensor will be described first, and then the magnetic body and the magnetic sensor will be described respectively.

### (1) Positional Relationship between Magnetic Body and Magnetic Sensor

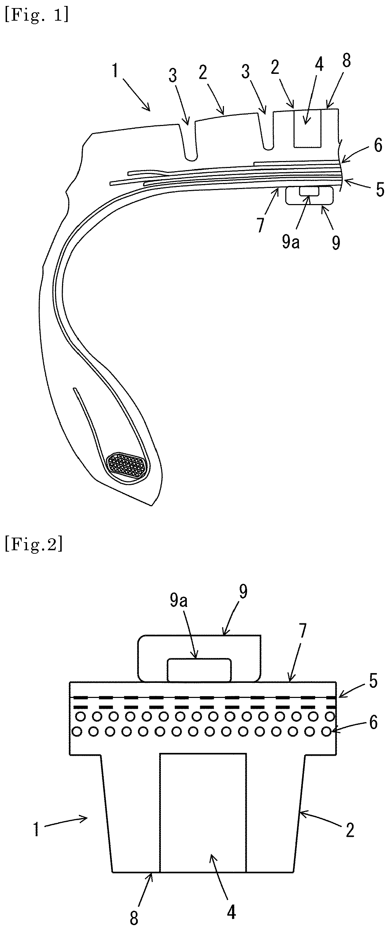

Fig. 1 shows a cross-sectional view showing a part of a cross section of a pneumatic tire in accordance with this embodiment, and Fig. 2 shows a schematic view showing a positional relationship between a magnetic body and a magnetic sensor in a pneumatic tire in accordance with this embodiment. As shown in Figs. 1 and. 2, reference numeral 1 denotes a tread portion, a tread pattern is formed by a convex portion (land portion) 2 and a concave portion (sea portion) 3, and is in contact with the ground surface at a contact surface 8. And, 4 is a magnetic body, 5 is a carcass, 6 is a breaker, 7 is a lumen surface, 9 is a sensor module, and 9a is a magnetic sensor.

In the present embodiment, as shown in Fig. 1, the magnetic body 4 constitutes a part of the convex portion 2 of the tread portion 1 and is provided so that it extends along the tire radial direction. More specifically, the magnetic body 4 is exposed to the outside of the tire so that the end portion on the outer side in the radial direction of the tire forms a contact surface 8 at the convex portion 2, and the end portion on the inner side in the radial direction of the tire is buried in the tread portion 1 so that the end portion is located inward side in the tire radial direction of the position of the wear limit defined by the national laws or the like for the tire (for example, for a passenger car tire, a light truck tire and a tire for truck and bus, the height from the bottom of the main groove is 1.6 mm position). The sensor module 9 is configured to have the magnetic sensor 9a detecting the magnetic flux density formed by magnetic field of the magnetic body 4. The magnetic sensor 9a is disposed on tire lumen surface 7 and is located at a radially inward position corresponding to the burying position of the magnetic body 4 as shown in Fig. 2.

As described above, since the magnetic sensor 9a and the magnetic body 4 are disposed so as to face the inside and the outside in the radial direction of one tire, the interval therebetween is always kept constant, the change of the magnetic flux density in the magnetic body 4 can be detected by the magnetic sensor 9a without being influenced by the inclination of the vehicle body, the road surface condition during running or the tire air pressure. Therefore, the wear state can be grasped with high accuracy at all times.

With respect to the aspect of the magnetic body, there is no particular limitation as long as the magnetic sensor and the magnetic body have the positional relationship as described above and it is possible to measure the changing magnetic flux density of the magnetic body with the magnetic sensor. For example, the magnetic body may be buried so that the outer end portion in the radial direction of the tire is not exposed to the outside of the tire but positioned inside the tread portion 1, or the end portion on the inner side may be buried so as to substantially coincide with the position of the wear limit or be located on the outer side in the tire radial direction from the position of the wear limit.

At this time, it is preferable that the magnetic body 4 is buried in tread portion 1 so that the difference of the magnetic flux density between the magnetic flux density of in the brand-new state (unworn state) before the tread portion 1 wears detected by the magnetic sensor 9a provided on the lumen surface 7, and the magnetic flux density when the tread portion 1 worn to the wear limit detected by the magnetic sensor 9a provided on the lumen surface 7 is 1 mT or more. The difference between the magnetic flux densities referred to here is, for example, a difference between the magnetic flux density detected by the magnetic sensor 9a in a state where the magnetic body 4 is not worn and the magnetic flux density detected by the magnetic sensor 9a with respect to the magnetic body 4 remaining when the tread portion 1 wears to the wear limit, when the end portion on the inner side in the tire radial direction of the magnetic body 4 is buried in the tread portion 1 so that it is positioned on the inner side in the tire radial direction with respect to the position of the wear limit; and
a difference between the magnetic flux density detected by the magnetic sensor 9a in a state where the magnetic body 4 is not worn and the magnetic flux density detected by the magnetic sensor 9a in a state where all of the magnetic body 4 wears and the magnetic body 4 wears away from the tread portion 1, when the end portion on the inner side in the tire radial direction of the magnetic body 4 is buried in the tread portion 1 so as to coincide with the position of the wear limit or to be located on the outer side in the tire radial direction from the position of the wear limit. In this case, by arranging the end portion on the inner side in the radial direction of the tire of the magnetic body 4 so as to coincide with the specific height position from the bottom surface of the main groove, it is possible to grasp exceeding the specific height position from the magnetic flux density detected by the magnetic sensor 9a.

The pair of the magnetic body and the magnetic sensor may be provided only on one convex portion formed in the tread portion 1 or may be provided in a plurality of convex portions. Further, in one convex portion formed in the tread portion 1, only one pair may be provided in the circumferential direction of the tire, or a plurality of the pairs are provided, for example, at equal intervals. As a pair of a magnetic body and a magnetic sensor, one magnetic sensor may be installed on the tire lumen surface corresponding to one magnetic body burying position, or a plurality of magnetic sensors may be installed on the tire lumen surface corresponding to one magnetic body burying position.

### (2) Magnetic Body

The magnetic body 4 is formed by dispersing powdered or granular material (magnetic powder) of a hard magnetic material in a polymeric material and is magnetized in one direction, and it is buried in the tread portion in a posture of its magnetization direction coincides with the tire radial direction. In the case where a magnetic body is formed using such a powder material of a hard magnetic material, since this magnetic body becomes a permanent magnet by magnetization, it is possible to form a magnetic field with a predetermined magnetic flux density around the magnetic body, and there is no easy demagnetization after magnetization.

As the magnetic powder, from the viewpoint that the coercive force after magnetization is large and it is not easily demagnetized, it is preferable to use magnetic powder for producing alnico magnets containing aluminum, nickel, cobalt, iron as main components, ferrite magnets containing iron oxide as a main component, samarium magnets containing samarium and iron as main components, neodymium magnets containing neodymium, iron, and boron as main components.

Specific examples of alnico magnets include Al - Ni - Co - Fe - Cu and the like, Fe₂O₃-SrO and the like, for ferrite magnets, Sm - Co - Fe - Cu, Sm - Fe - N and the like, for samarium magnets, and examples of neodymium magnets include Nd - Fe - B - Dy, Nd - Fe - Nb - B, Nd - Pr - Fe - Nb - B and the like.

In addition, two or more kinds of the magnetic powders described above may be selected and used in combination. For example, by mixing a ferrite magnetic powder and a samarium magnetic powder or by mixing a samarium magnetic powder and a neodymium magnetic powder, a samarium-ferrite magnetic material, or samarium-neodymium magnetic material can be formed respectively.

Considering the dispersibility of the magnetic powder in the polymer material at the time of formation of the magnetic body and wear property accompanying with the metal particle, it is preferable that the particle diameter is 400 µm or less, and it is more preferable that it is 250 µm or less.

As a polymer material, from the viewpoint of sufficiently exhibiting properties as a tire, a resin material or a rubber material capable of exhibiting elasticity in a cured state is preferable. From the viewpoint that the magnetic body obtained by dispersing a magnetic powder wears like the tread rubber and provides a stable ride quality, it is preferable to use a resin material or a rubber material capable of exhibiting the same wear characteristics as the tread rubber composition after curing.

Among the above polymer materials, in view of the fact that the place where the magnetic body is provided is the tread portion, a rubber material having the same composition as the tread rubber composition used for the tread portion is preferable. That is, the magnetic body is preferably formed by dispersing the magnetic powder in a rubber material having the same composition as the tread rubber composition. For example, a part of the filler in the formulation of the tread rubber composition may be replaced with a magnetic powder. The compounding amount of the magnetic powder in the magnetic body is preferably from 10 to 70 mass%, more preferably from 30 to 70 mass%, still more preferably from 40 to 70 mass%.

Magnetization of the magnetic body can be performed by using a known magnetizing device, for example, a condenser magnetizing power supply, a magnetizing coil, a magnetizing yoke or the like. The timing of magnetization may be carried out before being embedded in the tread portion or after burying in the tread portion.

As a magnetic body, from the viewpoint that it is possible to reliably measure the magnetic flux density of the magnetic body without being influenced by geomagnetism, it is preferable that the magnetic body is configured to have a magnetic flux density of 0.05 mT or more at the measurement position where the magnetic sensor is disposed. From the viewpoint that it is possible to reliably measure the magnetic flux density of the magnetic body even under the influence of the magnetization or attenuation by the steel cord provided inside the tire, it is more preferable that the magnetic flux density of 0.5 mT or more at the measurement position. Considering such a viewpoint, it is preferable that the magnetic body has a magnetic flux density of 1 mT or more on the magnetic body surface.

On the other hand, from the viewpoint of not affecting other electronic devices and the like mounted on the vehicle by the magnetic force of the magnetic body, it is preferable that the surface magnetic flux density of the magnetic body is 600 mT or less. From the viewpoint of preventing adsorption of metal pieces such as nails fallen on the road surface, it is more preferable that the surface magnetic flux density of the magnetic body is 60 mT or less. The surface magnetic flux density of the magnetic body is a value measured by bringing the Tesla meter directly into contact with the surface of the magnetized magnetic body.

### (3) Magnetic Sensor

The magnetic sensor is provided to measure the magnetic flux density of the magnetic body which changes as the magnetic body wears in accordance with the wear of the tread portion. In the present embodiment, as shown in Fig. 2, the magnetic sensor 9a is disposed at a radially inward position corresponding to the magnetic body 4 on the lumen surface 7 of the tire.

In this manner, the magnetic sensor 9a and the magnetic body 4 are arranged at positions facing each other in one tire, and the magnetic sensor 9a detects the magnetic lines of force densely formed in one direction toward 9a with the magnetic sensor 9a, so that it is possible to constantly and accurately measure the magnetic flux density of the continuously varied due to wear of the magnetic body at all times.

As a specific magnetic sensor, a Hall element, a magnetic resistance (MR) element, a magnetic impedance (MI) element, and the like can be mentioned from the viewpoint that they are a small size that can be installed on the tire lumen surface and they can withstand vibration and deformation of the rotating tire sufficiently. Of these, from the viewpoint of accuracy, a magnetic resistance element is more preferable. As a magnetic sensor, it is preferable that a magnetic sensor possible to measure a magnetic flux density difference of 1 mT or more so that both the state in which the magnetic body 4 is not worn and the remaining state when the tread portion 1 wears to the wear limit can be appropriately measured. That is, it is preferable that the effective measurement range of the magnetic flux density in the magnetic sensor is 1 mT or more.

The sensor module 9, together with the magnetic sensor 9a, is configured of a receiving section for receiving the detected data, a transmitting unit for transmitting the received data by wire or by a wireless transmission to the wearing state determination device provided on the vehicle body, an antenna associated therewith, a power source, and the like accommodated in a housing.

In addition to the magnetic sensor 9a, the sensor module 9 may also contain a pressure sensor for detecting the internal pressure of the tire, a temperature sensor for measuring the temperature, an acceleration sensor for detecting the acceleration, and the like. By using a plurality of sensors, in addition to the magnetic flux density, the internal pressure of the tire, the temperature of the tire, the acceleration data and the like can be acquired in real time. By comprehensively analyzing each data acquired by the plurality of sensors, it is possible to grasp the state of the tire in more detail, and it can be used effectively for automatic vehicle operation control expected in the future.

The configuration of the sensor module 9 is not limited to the configuration described above but may also be configured so that it has a storage unit that stores data for comparison indicating a relationship between a wear amount and a magnetic flux density described later and a measuring section for measuring the wear state of the tread portion based on the magnetic flux density detected by the magnetic sensor 9a, and the data of the wear state measured by the measuring section is transmitted to the apparatus provided in the vehicle body by the transmitting section.

As a method of mounting sensor module 9 to the tire, for example, a method of installing to the socket provided on the tire lumen surface, a method of directly installing to the tire lumen surface, a method of embedding in the tire, etc can be adopted as appropriate. Among them, the mounting of the sensor module to the socket provided on the tire lumen surface is particularly preferable, because it is easy to install and replace.

### [2] Tire Wear Measuring Method in accordance with the Present Embodiment

Next, a tire wear measuring method in accordance with the present embodiment will be described.

In the present embodiment, the wear state of the above-described pneumatic tire is measured in accordance with the following procedure.

### 1. Advance Data Acquisition

Prior to the measurement, for a tire of the same type as that of the object to be measured, the magnetic flux density of the magnetic field changed by wear of the magnetic body is measured by a magnetic sensor provided on the lumen surface in advance, and data is acquired.

Specifically, first, the magnetic flux density in a new tire immediately after manufacture (tire of the same type as the object to be measured) is measured, and thereafter, this tire is made to wear using a tire wear drum testing machine until the wear limit is exceeded. Then, the apparatus is stopped at predetermined time intervals, and the wear amount and the magnetic flux density at that point in time are measured.

Thereafter, data for comparison indicating the relationship between the wear amount and the magnetic flux density is created based on measured amounts of the wear and the magnetic flux density at each point in time, and the created data is stored in the wear state determination device provided on the vehicle body.

### 2. Mounting the Tire to be measured on the Actual Car and Run the Car

Next, the tire to be measured is mounted to the actual car and run the car. As the magnetic body wears together with the tread portion by running, the magnetic flux density detected by the magnetic sensor changes.

Then, by comparing this change in the magnetic flux density measured by the magnetic sensor with the data for comparison stored in advance in the wear state determination device, it is possible to determine to what extent the wear is progressing in the tire to be measured.

In addition, in measuring the magnetic flux density, the influences of the change in the magnetic flux density caused by the change in the external magnetic field (disturbance) or the like can be considered. However, since these influences appear as a large change unlike the magnetic flux density gradually changing as the tire wear progresses gradually, these disturbances can be eliminated by applying statistical processing.

As described above, by applying the tire wear measuring method in accordance with the present embodiment, it is possible to keep the positional relationship between the magnetic sensor and the magnetic body constant and to constantly measure the magnetic flux density that changes in accordance with wear at all times, so that it is possible to accurately and constantly measure the wear state of the tire.

### [3] Tire Wear Measurement System in accordance with the Present Embodiment

By systemizing the tire wear measuring method in accordance with the present embodiment described above, it is possible to provide the tire wear measuring system in accordance with the present embodiment, and by the system, the wear state of the tire can be measured more accurately and constantly.

### [EXAMPLES]

Hereinafter, the present invention will be described more specifically based on concrete experiments

### 1. Preparation of Test Sample

Neodymium powder having an average particle size of about 175 µm was kneaded into a tread standard compounding rubber material of a tire for truck and bus (a pneumatic tire for heavy duty), then the kneaded material was formed into a columnar rubber pieces, and vulcanization molded was performed to obtain a magnetic body having diameter 28 mm × height 13 mm as the test samples. Four kinds of magnetic bodies were prepared, where the blending amounts of neodymium powder in the magnetic bodies were 10%, 30%, 50% and 65% in mass%. The magnetization was performed by applying a magnetic field of 2.5 T in the height direction for saturation magnetization using a high-voltage condenser magnetizer manufactured by Nippon Electric Meter Co., Ltd at the timing after vulcanization molding. The preparation conditions of each test sample are shown in Table 1. Further, the test sample was placed in the tread portion of a tire for truck and bus having a structure as shown in Fig. 1. The magnetic flux density measured on a radial inside position of the lumen surface corresponding to the position of the test sample is also shown in Table 1. A tesla meter (manufactured by Nippon Electric Meter Co., Ltd.) was used for measuring the magnetic flux density.

**[Table 1]**

| | Dimension (diameter × height) | Material for Magnetic Body | Blending Amount (wt%) | Magnetic Flux Density (mT) |
|---|---|---|---|---|
| Sample A | 28mm × 13mm | Neodymium | 10 | 0.48 |
| Sample B | 28mm × 13mm | Neodymium | 30 | 1.47 |
| Sample C | 28mm × 13mm | Neodymium | 50 | 2.41 |
| Sample D | 28mm × 13mm | Neodymium | 65 | 3.54 |

### 2. Wear Test

Thickness of each of the four kinds of test samples prepared was reduced stepwise to 13 mm → 11 mm → 9 mm → 7 mm → 5 mm → 3 mm with a surface grinding machine. Accurate thickness in each wear state was measured with a digital gauge manufactured by PEACOCK (PDN -21). Then, each of the test samples was installed in the tread portion of the tires for truck and bus, and the magnetic flux density was measured on the radial inside position of the lumen surface corresponding to the position of the test sample.

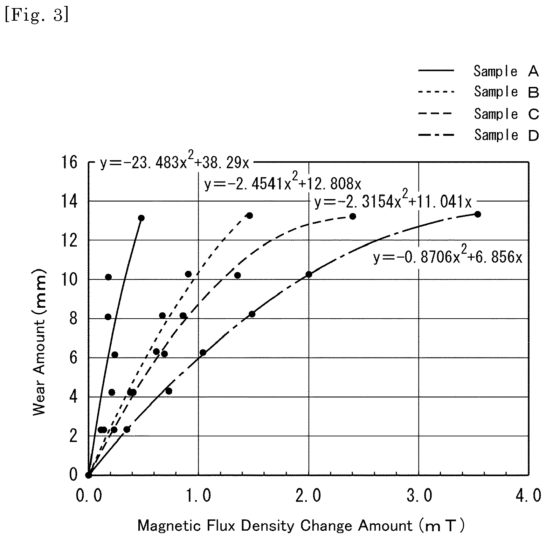

In order to check the change from the initial state, the wear amount was calculated from the thickness of the test sample and the reduction amount of the magnetic flux density was calculated from the magnetic flux density of the above measurement result. The results are shown in Fig. 3. In Fig. 3, the horizontal axis represents the magnetic flux density change amount (mT) and the vertical axis represents the wear amount (mm). A state in which the wear amount is 0 mm represents an unworn state before the tread portion wears and a state in which the wear amount is 13 mm, that is, a state in which the magnetic body wears out, represents a state when the tread portion wears to the wear limit.

As shown in Fig. 3, a quadratic regression curve can be obtained from the relationship between the magnetic flux density change amount and the wear amount of each sample. Therefore, the amount of wear can be estimated from this flux density change amount.

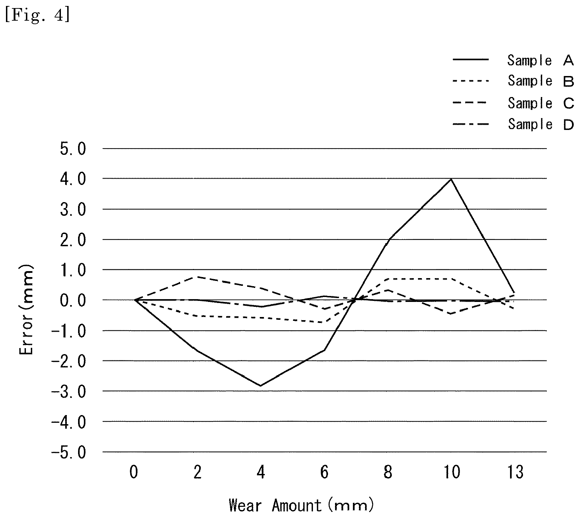

Next, using the quadratic regression curve of each sample obtained above, the amount of wear was estimated from the magnetic flux density change amount, and an error from the actual wear amount was calculated. The calculation results are shown in Fig. 4.

As shown in Fig. 3 and Fig. 4, in the sample A in which the difference between the magnetic flux density detected on the tire lumen surface in the unworn state before the tread portion is worn and the magnetic flux density detected on the tire lumen surface when the tread portion wears to the wear limit is less than 1 mT, the error increases and the estimation of the wear amount were not obtained with high accuracy. Therefore, from the viewpoint of making it possible to estimate the wear amount with estimation accuracy within 1 mm error, the magnetic flux density difference is preferably 1 mT or more, more preferably 2 mT or more, still more preferably 3 mT or more. In this case, it is preferable to use a magnetic sensor capable of measuring a magnetic flux density difference of 2 mT or more or 3 mT or more.

Although the present invention has been described based on the embodiments, the present invention is not limited to the above-described embodiments. Various modifications can be made to the above embodiment within the same and equivalent scope as the present invention.

### [DESCRIPTION OF THE REFERENCE NUMERALS]

- 1: Tread portion
- 2: Convex portion
- 3: Concave potion
- 4: Magnetic body
- 5: Carcass
- 6: Breaker
- 7: Lumen surface
- 8: Contact surface
- 9: Sensor module
- 9a: Magnetic sensor

## Claims

1. A pneumatic tire comprising:
a magnetic body provided in a tread portion;
a magnetic sensor for detecting a magnetic flux density of a magnetic field formed by the magnetic body disposed at a radially inward position corresponding to the magnetic body;
wherein a magnetic body is formed by dispersing powdery particles of a hard magnetic material in a polymeric material and is magnetized in one direction and is provided in the tread portion so that the magnetization direction and the tire radial direction coincide with each other.

2. The pneumatic tire in accordance with claim 1, wherein a position where the magnetic sensor is disposed is a lumen surface.

3. The pneumatic tire in accordance with claim 1 or 2, wherein the magnetic body is provided so as to be the difference between a magnetic flux density detected by the magnetic sensor in a brand-new state before wear of the tread portion and a magnetic flux density detected by the magnetic sensor in a state where the tread portion wears to the wear limit is 1 mT or more.

4. The pneumatic tire in accordance with any one of claims 1 to 3, wherein the hard magnetic material is one or more magnetic powders selected from the group consisting of magnetic powders for producing alnico magnets, ferrite magnets, samarium magnets, and neodymium magnets.

5. A tire wear measuring method for measuring a wear state in a pneumatic tire in accordance with any one of claims 1 to 4, comprising:
measuring a magnetic flux density of a magnetic field changed by wear of the magnetic body with the magnetic sensor and measuring a wear state of the pneumatic tire based on a change in the measured magnetic flux density.

6. A tire wear measuring system for measuring a wear state in a pneumatic tire in accordance with any one of claims 1 to 4,
which is configured to measure a wear state of the object pneumatic tire by;
detecting a magnetic flux density, changing according to wear state of the magnetic body, of a same type of tire as the object pneumatic tire in advance, and
comparing a magnetic flux density detected in the object pneumatic tire by the magnetic sensor.

7. A sensor module installable inside a pneumatic tire,
which has a magnetic sensor for detecting a magnetic flux density of a magnetic field in a tire radial direction of the tread portion, and
is configured to measure wear of the tread portion based on a magnetic flux density detected by the magnetic sensor.

8. The sensor module in accordance with claim 7, wherein the magnetic sensor can be disposed on the lumen surface of the pneumatic tire.

9. The sensor module in accordance with claim 7 or 8, wherein the magnetic sensor can measure a magnetic flux density difference of 1 mT or more.
